# EUROPÄISCHE PATENTSCHRIFT

(11) **EP 0 711 319 B1**
(45) Veröffentlichungstag und Bekanntmachung des Hinweises auf die Patenterteilung: **29.10.1997**
(21) Anmeldenummer: 94924793.6
(22) Anmeldetag: 22.07.1994
(51) Int. Cl.: C08J 3/28, C09D 5/03, C09D 123/02, C09J 123/02, B29B 9/16

(54) **VERFAHREN ZUR HERSTELLUNG EINES ALS PULVERBESCHICHTUNGSMATERIAL UND/ODER SCHMELZKLEBER EINSETZBAREN KUNSTSTOFFES**
PROCESS FOR PRODUCING PLASTICS SUITABLE AS POWDER COATING MATERIAL AND/OR HOT-MELT-TYPE-ADHESIVE
PROCEDE DE FABRICATION D'UNE MATIERE PLASTIQUE S'UTILISANT COMME MATERIAU DE RECOUVREMENT PULVERULENT ET/OU COMME COLLE THERMOFUSIBLE

(30) Priorität: 26.07.1993 DE 4325377
(43) Veröffentlichungstag der Anmeldung: 15.05.1996
(73) Patentinhaber: ARPLAS Gesellschaft für Plasmatechnologie mbH, 06369 Weissandt-Gölzau (DE)
(72) Erfinder: BERGER, Steffen, D-06124 Halle/Saale (DE)
(74) Vertreter: Schneider, Henry
(86) Internationale Anmeldenummer: EP9402407
(87) Internationale Veröffentlichungsnummer: WO9503344

(56) Entgegenhaltungen:
- DE-A- 4 141 805
- US-A- 4 626 473
- US-A- 5 234 723
- DATABASE WPI Derwent Publications Ltd., London, GB; AN 92-337531[41] & JP,A,4 243 543
- DATABASE WPI Derwent Publications Ltd., London, GB; AN 78-03356A[02] & JP,A,52 141 864
- DATABASE WPI Derwent Publications Ltd., London, GB; AN 77-8370Y[47] & JP,A,52 121 651
- DATABASE WPI Derwent Publications Ltd., London, GB; AN 84-051501[09] & JP,A,59 008 732
- CHEMICAL ABSTRACTS, vol. 102, no. 2, 14. Januar 1985, Columbus, Ohio, US; abstract no. 8261f, RODCHENKO, D.A. ET AL 'Change in the Properties of Polyethylene during Coating Application using Low-temp. Plasma' Seite 86 ;Spalte L ;

## Beschreibung

Die Erfindung betrifft ein Verfahren zur Herstellung eines vorzugsweise als Pulverbeschichtungsmaterial und/oder Schmelzkleber einsetzbaren Kunststoffes sowie dessen Verwendung.

Es sind bereits Verfahren zur Herstellung von Pulver-beschichtungsmaterialien bekannt (Katalog MIRATHEN, Leuna Werke AG, 10/92), bei denen in der Regel eine Abmischung von Polyethylen mit α-olefinischen polymeren Zusätzen erfolgt. Die polymeren Zusätze enthalten dabei bestimmte funktionelle Gruppen, die eine entsprechende Verwendung des daraus hergestellten Pulverbeschichtungsmaterials ermöglicht. Hierbei ist nachteilig, daß jeweils immer nur ein Pulverbeschichtungsmaterial für eine begrenzte Anwendung hergestellt werden kann. Hingegen ist es nicht möglich, ein Pulverbeschichtungsmaterial für ein breites Anwendungsfeld herzustellen.

Weiterhin sind Schmelzkleber vor allem auf der chemischen Basis von Polyvinylacetat, Polyamide, Ethylen-Vinylacetat-Copolymere und Polyester bekannt. Diese Schmelzkleber sind ebenfalls auf bestimmte spezielle Anwendungsfälle, deren Anforderungen sie erfüllen, abgestimmt, so daß einer vielseitigen Einsatzmöglichkeit der Schmelzkleber starke Grenzen gesetzt sind.

Aus der DE-A 41 41 805 ist ein Verfahren und eine Vorrichtung zur Herstellung von thermoplastischen Kunststoffteilen mit Hilfe von Niedertemperaturplasmen bekannt. Hierbei werden pulver- oder granulatförmige Rohstoffe mit dem Niedertemperaturplasma vor deren Formung zu einem Halbzeug oder Bauteil behandelt, um über einen befristeten Zeitraum eine Modifizierung der Pulverkornoberfläche der Rohstoffe zu erhalten.

Der Erfindung liegt daher die Aufgabe zugrunde, ein Verfahren der gattungsgemäßen Art zu schaffen, mit dem in einfacher und kostengünstiger Weise Pulverbeschichtungsmaterialien und/oder Schmelzkleber hergestellt werden können, die vielseitig, das heißt für eine Vielzahl von unterschiedlichen Anwendungsgebieten, einsetzbar sind.

Erfindungsgemäß wird diese Aufgabe dadurch gelöst, daß Polyolefine einer Niedertemperatur-Plasmabehandlung mit während der Behandlung wechselnden Frequenzen in einem Frequenzbereich von 30 kHz bis 10 GHz unterzogen werden. Unter Niedertemperatur-Plasmabehandlung wird hier verstanden, daß das zu behandelnde Material selbst nicht über einen bestimmten Temperaturbereich, beispielsweise 40 °C bis 60 °C, hinaus erwärmt wird. Es wurde überraschenderweise gefunden, daß durch diese Plasmabehandlung die eingebrachten Polyolefine so eingestellt werden können, daß diese als Pulverbeschichtungsmaterialien bzw. Schmelzkleber übergreifend, insbesondere auch bei verschiedenen Materialien, eingesetzt werden können.

In vorteilhafter Ausgestaltung der Erfindung ist vorgesehen, daß die Plasmabehandlung vorzugsweise in einem Frequenzbereich von 13,56 MHz bis 2,45 GHz durchgeführt wird. Insbesondere, wenn die Plasmabehandlung mit wechselnden Frequenzen, vorzugsweise mit Kombinationen verschieden hoher, wechselnder Frequenzen durchgeführt wird, kann sehr vorteilhaft auf einen unterschiedlichen chemischen Aufbau und unterschiedliche Zusammensetzungen der als Ausgangsstoffe dienenden Polyolefine eingegangen werden, so daß in jedem Fall Pulverbeschichtungsmaterialien oder Schmelzkleber mit den für ihren Einsatzfall notwendigen Eigenschaften hergestellt werden können.

In weiterer bevorzugter Ausgestaltung der Erfindung ist vorgesehen, daß die Plasmabehandlung unter Zufuhr eines Inertgases, beispielsweise Helium und/oder Argon, oder unter Zufuhr eines Reaktionsgases, beispielsweise Sauerstoff und/oder Stickstoff, durchgeführt wird. Weiter bevorzugt ist, wenn die Plasmabehandlung nacheinander mit einem Inertgasplasma und wenigstens einem Reaktionsgasplasma oder einem Reaktionsgasplasmagemisch oder unter Zufuhr eines Gemisches aus wenigstens einem Inertgas und einem Reaktionsgas durchgeführt wird. Durch Auswahl einer auf das Ausgangsmaterial abgestimmten Zusammensetzung des Prozeßgases (Inertgas, Reaktionsgas, Reaktionsgasgemisch) ist es möglich, die in die Polyolefine die zum Zwecke einer Beschichtung und/oder Verklebung erforderlichen reaktiven Gruppen, beispielsweise Hydroxylgruppen, Caboxylgruppen, primäre und sekundäre Aminogruppen im ausreichenden Maße einzubauen. Diese Gruppen sind in der Lage, mit dem zu beschichtenden und/oder zu verklebenden Material zu reagieren und chemische Bindungen auszubilden und/oder physikalisch zu haften. Ebenfalls erzeugte polare, aber nicht reaktive Gruppen (Carbonylgruppen, tertiäre Aminogruppen) bewirken nur eine physikalische Haftung.

Insbesondere bei einer Abfolge von Kombinationen verschiedener Frequenzen, wobei diese Kombinationen auf das jeweilige Prozeßgas und auf das Ausgangsmaterial abgestimmt sind, lassen sich Pulverbeschichtungsmaterialien und/oder Schmelzkleber mit gewünschten Eigenschaften herstellen.

Weitere vorteilhafte Ausgestaltungen der Erfindung ergeben sich aus den übrigen in den Unteransprüchen angegebenen Merkmalen.

Die Erfindung wird nachfolgend in einem Ausführungsbeispiel anhand der zugehörigen Zeichnungen näher erläutert. Es zeigen:
- Figur 1: einen Verfahrensablauf zur Herstellung eines Pulverbeschichtungsmaterials und/oder eines Schmelzklebers in einem Flußdiagramm und
- Figur 2: eine schematische Darstellung einer Anordnung zur Durchführung des Verfahrens.

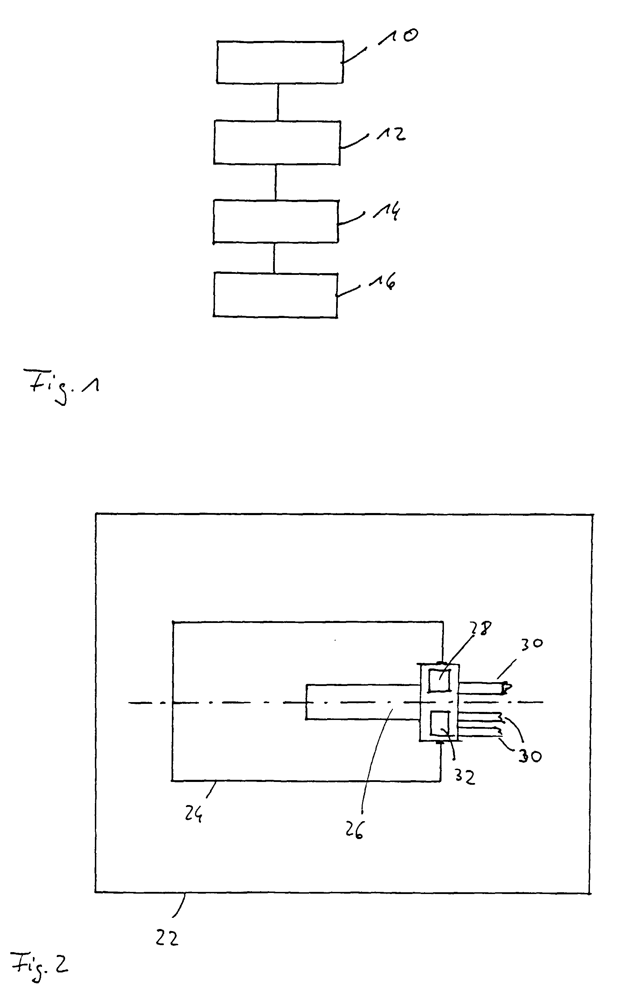

In der Figur 1 soll das Verfahren mit Hilfe eines Diagrammes verdeutlicht werden. In einem ersten Schritt 10 werden die als Ausgangsmaterialien zur Verfügung stehenden Polyolefine vorbereitet. Die Polyolefine werden hier in eine Pulver- und/oder Granulatform gebracht, deren Körnungsgröße beispielsweise kleiner als 1 mm ist, wobei gegebenenfalls erforderliche Zusätze, wie beispielsweise Stabilisatoren, zugegeben werden. Als Ausgangsmaterialien können sowohl neuwertige Polyolefine als auch aus Recyclingmaterial gewonnene Polyolefine verwendet werden. Bei Polyolefinen aus Recyclingmaterial ist zu beachten, daß diese nicht zu stark geschädigt sind, das heißt, daß noch eine geeignete Molekularstruktur vorhanden ist. In einem nächsten Schritt 12 wird das vorbereitete Ausgangsmaterial in eine Prozeßkammer gegeben. Die Prozeßkammer kann dabei beispielsweise eine Drehtrommel eines an sich bekannten Plasmaofens zur Durchführung einer Niedertemperatur-Plasmabehandlung sein.

In einem nächsten Schritt 14 werden die für die Behandlung des Ausgangsmaterials gewünschten Prozeßparameter und Prozeßgase eingestellt. Hierbei werden insbesondere die speziellen Kombinationen der Prozeßgase, das heißt, eine erste Behandlung mit einem Inertgasplasma, vorzugsweise mit Helium und/oder Argon, und die nachfolgende Behandlung mit einem Reaktionsgasplasma, vorzugsweise mit Sauerstoff und/oder Stickstoff, oder auch die Behandlung mit einem Plasma, das aus einem Gemisch der vorgenannten Gase erzeugt wird, festgelegt. Weiterhin erfolgt die Einstellung der zur Plasmaerzeugung im Vakuum notwendigen Hochfrequenzen und deren zeitliche Abfolge.

So sind Varianten denkbar, in der erst mit einer niederen Frequenz, beispielsweise 13,56 MHz, und anschließend mit einer höheren Frequenz, beispielsweise 2,45 GHz, eine Plasmabehandlung durchgeführt wird. Darüber hinaus ist eine alternierende Zuschaltung der Frequenzen denkbar. Selbstverständlich können auch andere Frequenzen in beliebiger, frei wählbarer Reihenfolge zur Durchführung der Plasmabehandlung eingestellt werden. Im übrigen wird die gewünschte Drehzahl der Drehtrommel, beispielsweise im Bereich zwischen 4 und 20 Umdrehungen pro Minute, sowie der gewünschte Prozeßdruck, der beispielsweise im Bereich zwischen 0,3 mbar und 1 mbar liegt, eingestellt. Während der Plasmabehandlung kann der Prozeßdruck verfahrensbedingt Schwankungen unterliegen. Weiterhin wird die Behandlungsdauer festgelegt, mit der die Behandlung des Ausgangsmaterials erfolgt. Diese beträgt beispielsweise zwischen 15 und 600 s. Die genannten Prozeßparameter bzw. Prozeßgase können untereinander in beliebiger Zusammenstellung variiert werden und sind insbesondere auf die Zusammensetzung des jeweiligen konkret vorliegenden Ausgangsmaterials abgestimmt.

In einem nächsten Schritt 16 erfolgt dann die Plasmabehandlung des Ausgangsmaterials mit den in dem Schritt 14 eingestellten Prozeßparametern bzw. Prozeßbedingungen. Hierbei ist es ebenfalls denkbar, daß während der Plasmabehandlung in dem Schritt 16 eine Veränderung und/oder Anpassung der Prozeßparameter, beispielsweise durch eine Regelung, erfolgen kann. Durch die beschriebene Kombination der Prozeßgase und der Prozeßparameter der Niedertemperatur-Plasmabehandlung ist der zum Zweck einer Beschichtung und/oder Verklebung erforderliche Einbau reaktiver Gruppen in Abhängigkeit von dem eingesetzten Ausgangsmaterial in die Polyolefine in ausreichendem Maße erreichbar.

Die mit dem erfindungsgemäßen Verfahren hergestellten Pulverbeschichtungsmaterialien und/oder Schmelzkleber können aus allen zur Gruppe der Polyolefine gehörenden Verbindungen, beispielsweise aus allen Polyethylentypen (LDPE, LLDPE, HDPE) sowie Polypropylen hergestellt werden.

Mit den hergestellten Pulverbeschichtungsmaterialien und/oder Schmelzklebern können sämtliche Werkstoffe, deren Schmelztemperatur oberhalb der Verarbeitungstemperatur der erfindungsgemäßen Stoffe liegt, beispielsweise ca. 120 °C bis 180 °C, beschichtet und/oder verklebt werden. Dies können beispielsweise so unterschiedliche Werkstoffe wie Glas, Keramik, Stahl, Aluminium, Holz, Papier und Polymere sein. Diese Werkstoffe können vorbeschichtet oder anderweitig vorbehandelt sein. Mit den erfindungsgemäßen Stoffen sind Beschichtungen und/oder Verklebungen erreichbar, die gegen äußere mechanische und/oder chemische Beeinflussungen weitgehend resistent sind und eine dauerhafte und gute Haftfestigkeit aufweisen. Durch diese vorteilhaften Eigenschaften ist ein Einsatz der mit dem erfindungsgemäßen Verfahren hergestellten Beschichtungsmatertialien vorzugsweise in solchen Bereichen möglich, die sehr hohe Anforderungen an eine Beschichtung stellen. Dies sind insbesondere eine Unterbodenbeschichtung im Automobilbau oder eine Beschichtung von Schiffsrümpfen. Darüber hinaus ist selbstverständlich jede weitere Einsatzmöglichkeit denkbar.

In der Figur 2 ist schematisch der Aufbau einer für das Verfahren einsetzbaren Vorrichtung gezeigt. Eine allgemein mit 22 bezeichnete Niedertemperaturplasmaanlage weist eine Drehtrommel 24 auf. Die Drehtrommel 24 dient als Prozeßkammer und kann beispielsweise aus einem beständigen Material wie Aluminium oder Edelstahl bestehen. Die Prozeßkammer ist zur Erzeugung eines Vakuums hermetisch abschließbar, wobei hier auf Einzelheiten nicht weiter eingegangen werden soll. Der Drehtrommel 24 ist eine als Reaktor dienende Einrichtung 26 zugeordnet, die mit einem Generator 28 zur Mikrowellenplasmaanregung und einer Hochfrequenzeinspeisung 32 gekoppelt ist. Weiterhin sind Zuleitungen 30 zum Heranführen von Prozeßgasen vorgesehen.

Die hier dargestellte Anordnung ist nur beispielhaft, und die Erfindung bezieht sich im einzelnen nicht auf den konkreten Aufbau der Anlage. Das erfindungsgemäße Verfahren kann selbstverständlich auch mit einer analogen, die einzelnen Verfahrensschritte vollziehenden Vorrichtung durchgeführt werden.

Das erfindungsgemäße Verfahren läuft nunmehr auf folgende Weise ab. Das ausgewählte und vorbereitete Ausgangsmaterial wird in die Drehtrommel 24 gegeben und dort entsprechend der gewählten Drehgeschwindigkeit und Drehrichtung, die auch abwechselnd gewählt werden kann, vermischt. Aber die Zuleitungen 30 wird das gewählte Prozeßgas bzw. Prozeßgasgemisch zugeführt und über den Generator 28 in dem Reaktor 26 ein Plasma erzeugt. Die Plasmaerzeugung kann hierbei vorzugsweise mit einer Mikrowelleneinstrahlung bei Leistungen zwischen 200 und 1500 W (2,45 GHz) erfolgen. Das Prozeßgas oder Prozeßgasgemisch weist hierbei vorzugsweise einen Prozeßdruck zwischen 0,3 und 1 mbar auf. Über die Hochfrequenzeinspeisung 32 wird eine Frequenz von beispielsweise 13,56 MHz angelegt und ein Plasma erzeugt. Aus dem erzeugten Plasma treffen aktivierte Teilchen auf das in die Drehtrommel 24 eingefüllte Ausgangsmaterial auf. Dies bewirkt eine Strukturveränderung innerhalb des Ausgangsmaterials, also des eingefüllten Polyolefins, in Form des Einbaus von polaren Gruppen (sauerstoff-und/oder stickstoffhaltig). Diese polaren Gruppen sind sowohl reaktive Gruppen (Hydroxylgruppen, Carboxylgruppen, primäre und sekundäre Aminogruppen) als auch nicht reaktive Gruppen (Carbonylgruppen, tertiäre Aminogruppen). Eine Vernetzung findet nicht statt. Durch entsprechende wechselnde Zuführung von unterschiedlichen Prozeßgasen über die Zuleitungen 30 und unterschiedliches Anlegen von Frequenzen über den Generator 28 bzw. die Hochfrequenzeinspeisung 32, kann auf unterschiedliche Zusammensetzungen der Ausgangsmaterialien Einfluß genommen werden.

In einem konkreten Beispiel wird in die Drehtrommel 24 als Ausgangsstoff LDPE (AL 22 FA) mit einer Korngröße kleiner 1 mm eingefüllt. Als Prozeßparameter wird ein Prozeßdruck von 0,75 mbar bei einer Umdrehungsgeschwindigkeit von 8 Umdrehungen pro Minute der Drehtrommel 24 eingestellt. Die Leistung des Generators 28 beträgt 600 W und die der Hochfrequenzeinspeisung 32 ebenfalls 600 W. Als Prozeßgase wird ein Gemisch von Argon, Sauerstoff und Stickstoff zugeführt und der eingebrachte Ausgangsstoff für die Dauer von 270 s plasmabehandelt. Der Generator 28 erzeugt dabei eine Frequenz von 2,45 GHz und die Hochfrequenzeinspeisung 32 eine Frequenz von 13,56 MHz. Mit dem nach Beendigung des Herstellungsverfahrens gewonnenen Stoff kann auf Glas bei einer Verarbeitungstemperatur von 160 °C eine transparente, gut haftende Beschichtung aufgebracht werden.

## Patentansprüche

1. Verfahrer zur Herstellung eines als Pulverbeschichtungsmaterial und/oder Schmelzkleber einsetzbaren Kunststoffes, **dadurch gekennzeichnet**, daß Polyolefine einer Niedertemperatur-Plasmabehandlung mit während der Behandlung wechselnden Frequenzen in einem Frequenzbereich von 30 kHz bis 10 GHz unterzogen werden.

2. Verfahren nach Anspruch 1, **dadurch gekennzeichnet**, daß die Plasmabehandlung in einem Frequenzbereich von 13,56 MHz bis 2,45 GHz durchgeführt wird.

3. Verfahren nach einem der vorhergehenden Ansprüche, **dadurch gekennzeichnet**, daß die Plasmabehandlung mit Kombinationen verschieden hoher, wechselnder Frequenzen durchgeführt wird.

4. Verfahren nach einen der vorhergehenden Ansprüche, **dadurch gekennzeichnet**, daß als Polyolefine Polyethylen und/oder Polypropylen eingesetzt werden.

5. Verfahren nach einem der vorhergehenden Ansprüche, **dadurch gekennzeichnet**, daß die Plasmabehandlung unter Zufuhr eines Inertgases, beispielsweise Helium und/oder Argon, durchgeführt wird.

6. Verfahren nach einem der vorhergehenden Ansprüche, **dadurch gekennzeichnet**, daß die Plasmabehandlung unter Zufuhr eines Reaktionsgases, beispielsweise Sauerstoff und/oder Stickstoff, durchgeführt wird.

7. Verfahren nach einem der vorhergehenden Ansprüche, **dadurch gekennzeichnet**, daß die Plasmabehandlung nacheinander mit einem Inertgasplasma und wenigstens einem Reaktionsgasplasma oder wenigstens einem Reaktionsgasgemischplasma oder unter Zufuhr eines Gemisches aus wenigstens einem Inertgas und wenigstens einem Reaktionsgas durchgeführt wird.

8. Verfahren nach einem der vorhergehenden Ansprüche, **dadurch gekennzeichnet**, daß die Plasmabehandlung bei einem Prozeßdruck von 0,3 mbar bis 1 mbar erfolgt.

9. Verfahren nach einem der vorhergehenden Ansprüche, **dadurch gekennzeichnet**, daß die Dauer der Plasmabehandlung 15 s bis 600 s beträgt.

10. Verfahren nach einem der vorhergehenden Ansprüche, **dadurch gekennzeichnet,** daß die Polyolefine als Pulver oder Granulat mit einer Korngröße von kleiner als 1 mm der Plasmabehandlung unterworfen werden.

11. Verfahren nach einem der vorhergehenden Ansprüche, **dadurch gekennzeichnet**, daß die Polyolefine während der Plasmabehandlung bewegt werden.

12. Verfahren nach Anspruch 11, **dadurch gekennzeichnet**, daß die Polyolefine in einer Drehtrommel mit vorzugsweise 4 bis 20 Umdrehungen pro Minute umgewalzt werden.

13. Verfahren nach einem der vorhergehenden Ansprüche, **dadurch gekennzeichnet**, daß die Polyolefine in Form von Neuware und/oder Recyclingware eingesetzt werden.

14. Verfahren nach einem der vorhergehenden Ansprüche, **dadurch gekennzeichnet,** daß den Polyolefinen vor der Plasmabehandlung übliche Kunststoffzusätze wie Stabilisatoren zugesetzt werden.

15. Pulverbeschichtungsmaterial, **dadurch gekennzeichnet**, daß es aus einem nach den Ansprüchen 1 bis 14 hergestellten Stoff besteht.

16. Schmelzklebstoff, **dadurch gekennzeichnet**, daß er aus einem nach den Ansprüchen 1 bis 14 hergestellten Stoff besteht.

17. Verwendung eines nach den Ansprüchen 1 bis 14 behandelten Polyolefins zum Verkleben und/oder Beschichten eines Materials, das eine oberhalb einer Verarbeitungstemperatur des behandelten polyolefins liegende Schmelztemperatur aufweist.

18. Verwendung eines nach den Ansprüchen 1 bis 14 behandelten Polyolefins zum Beschichten und/oder Verkleben von Glas, Keramik, Stahl, Aluminium, Holz, Papier und Polymeren.

19. Verwendung eines nach den Ansprüchen 1 bis 14 behandelten Polyolifins zum Verkleben und/oder Beschichten eines vorbeschichteten und/oder anderweitig vorbehandelten Materials.

20. Verwendung eines nach den Ansprüchen 1 bis 14 behandelten Polyolefins zur Unterbodenbeschichtung im Automobilbau.

21. Verwendung eines nach den Ansprüchen 1 bis 14 behandelten Polyolefins zur Beschichtung von Schiffsrümpfen.

## Claims

1. A process for the preparation of plastics usable as a powder-coating material and/or a hot-melt adhesive, characterised in that polyolefins undergo low-temperature plasma treatment at frequencies in a frequency range from 30 kHz to 10 GHz, the frequencies changing during the treatment.

2. A process according to claim 1, characterised in that the plasma treatment is carried out in a frequency range from 13.56 MHz to 2.45 GHz.

3. A process according to either one of the preceding claims, characterised in that the plasma treatment is carried out with combinations of varyingly high, changing frequencies.

4. A process according to any one of the preceding claims, characterised in that polyethylene and/or polypropylene are used as polyolefins.

5. A process according to any one of the preceding claims, characterised in that the plasma treatment is carried out by supplying an inert gas, for example helium and/or argon.

6. A process according to any one of the preceding claims, characterised in that the plasma treatment is carried out by supplying a reaction gas, for example oxygen and/or nitrogen.

7. A process according to any one of the preceding claims, characterised in that the plasma treatment is carried out successively using an inert-gas plasma and at least one reaction-gas plasma or at least one mixed reaction-gas plasma or by supplying a mixture of at least one inert gas and at least one reaction gas.

8. A process according to any one of the preceding claims, characterised in that the plasma treatment takes place at a process pressure of 0.3 mbar to 1 mbar.

9. A process according to any one of the preceding claims, characterised in that the duration of the plasma treatment is 15 s to 600 s.

10. A process according to any one of the preceding claims, characterised in that the polyolefins undergo the plasma treatment in the form of powder or granules with a grain size of less than 1 mm.

11. A process according to any one of the preceding claims, characterised in that the polyolefins are in motion during the plasma treatment.

12. A process according to claim 11, characterised in that the polyolefins are revolved in a rotary drum preferably at a rate of 4 to 20 revolutions per minute.

13. A process according to any one of the preceding claims, characterised in that the polyolefins are used in the form of new material and/or recycled material.

14. A process according to any one of the preceding claims, characterised in that conventional plastics additives such as stabilisers are added to the polyolefins before the plasma treatment.

15. A powder coating material, characterised in that it comprises a material prepared according to claims 1 to 14.

16. A hot-melt adhesive, characterised in that it comprises a material prepared according to claims 1 to 14.

17. Use of a polyolefin treated according to claims 1 to 14 for gluing and/or coating a material having a melting temperature above a processing temperature of the treated polyolefin.

18. Use of a polyolefin treated according to claims 1 to 14 for coating and/or gluing glass, ceramic, steel, aluminium, wood, paper and polymers.

19. Use of a polyolefin treated according to claims 1 to 14 for gluing and/or coating a precoated and/or otherwise pretreated material.

20. Use of a polyolefin treated according to claims 1 to 14 for coating underbodies in automobile construction.

21. Use of a polyolefin treated according to claims 1 to 14 for coating ships' hulls.

## Revendications

1. Procédé de préparation d'une matière de synthèse, ou matière plastique, utilisable comme matière pulvérulente de revêtement et/ou colle thermofusible, procédé caractérisé en ce qu'on soumet des polyoléfines à un traitement par du plasma à basse température avec, pendant le traitement, des fréquences variant dans un domaine de fréquences de 30 kHz à 10 GHz.

2. Procédé selon la revendication 1, caractérisé en ce que le traitement par du plasma est réalisé dans un domaine de fréquences de 13,56 MHz à 2,45 GHz.

3. Procédé selon l'une des revendications précédentes, caractérisé en ce que le traitement par du plasma est effectué avec des combinaisons de diverses fréquences hautes et variables.

4. Procédé selon l'une des revendications précédentes, caractérisé en ce qu'on utilise comme polyoléfines du polyéthylène et/ou du polypropylène.

5. Procédé selon l'une des revendications précédentes, caractérisé en ce que le traitement par du plasma a été effectué avec acheminement d'un gaz inerte, par exemple de l'hélium et/ou de l'argon.

6. Procédé selon l'une des revendications précédentes, caractérisé en ce que le traitement par du plasma est effectué avec acheminement d'un gaz réactif, par exemple de l'oxygène et/ou de l'azote.

7. Procédé selon l'une des revendications précédentes, caractérisé en ce que le traitement par du plasma est effectué successivement avec un plasma à gaz inerte et au moins un plasma à gaz réactif, ou au moins un plasma formé par un mélange de gaz réactifs ou sous acheminement d'un mélange d'au moins un gaz inerte et d'au moins un gaz réactif.

8. Procédé selon l'une des revendications précédentes, caractérisé en ce que le traitement par du plasma est effectué sous une pression de traitement de 0,3 mbar à 1 mbar.

9. Procédé selon l'une des revendications précédentes, caractérisé en ce que la durée du traitement par le plasma est de 15 secondes à 600 secondes.

10. Procédé selon l'une des revendications précédentes, caractérisé en ce que des polyoléfines sont soumises au traitement par un plasma en étant sous forme de poudre ou de granulats ayant une grosseur de grain inférieure à 1 mm.

11. Procédé selon l'une des revendications précédentes, caractérisé en ce que les polyoléfines sont remuées au cours de leur traitement par du plasma.

12. Procédé selon la revendication 11, caractérisé en ce que les polyoléfines sont retournées dans un tambour rotatif fonctionnant de préférence à 4 à 20 tours par minute.

13. Procédé selon l'une des revendications précédentes, caractérisé en ce que les polyoléfines sont utilisées sous forme d'une matière nouvelle et/ou d'une matière de recyclage.

14. Procédé selon l'une des revendications précédentes, caractérisé en ce que, avant leur traitement par du plasma, on rajoute aux polyoléfines des additifs usuels pour matière de synthèse ou matière plastique, comme des stabilisants.

15. Matière pulvérulente de revêtement, caractérisée en ce qu'elle consiste en une matière produite selon l'une des revendications 1 à 14.

16. Colle thermofusible, caractérisée en ce qu'elle consiste en l'une des matières préparées selon l'une des revendications 1 à 14.

17. Utilisation d'une polyoléfine, traitée selon les revendications 1 à 14, pour coller et/ou revêtir une matière présentant une température de fusion supérieure à une température de mise en oeuvre de la polyoléfine traitée.

18. Utilisation d'une polyoléfine, traitée selon les revendications 1 à 14, pour revêtir et/ou coller du verre, de la céramique, de l'acier, de l'aluminium, du bois, du papier et des polymères.

19. Utilisation d'une polyoléfine traitée selon les revendications 1 à 14 pour coller et/ou revêtir une matière prérevêtue et/ou prétraitée d'une autre façon.

20. Utilisation d'une polyoléfine, traitée selon les revendications 1 à 14, pour le revêtement de bas de caisse en construction automobile.

21. Utilisation d'une polyoléfine, traitée selon les revendications 1 à 14, pour revêtir des coques de navires.
